# EUROPÄISCHE PATENTSCHRIFT

(11) **EP 1 322 990 B1**
(45) Veröffentlichungstag und Bekanntmachung des Hinweises auf die Patenterteilung: **29.11.2006**
(21) Anmeldenummer: 01969758.0
(22) Anmeldetag: 24.09.2001
(51) Int. Cl.: G02B 27/22

(54) **VERFAHREN ZUR ERZEUGUNG VON BILDPUNKTGRUPPEN MIT LASERSTRAHLEN IM RAUM UND IN DER EBENE**
METHOD FOR PRODUCING PICTURE ELEMENT GROUPS BY MEANS OF LASER RAYS IN SPACE AND ON A PLANE
PROCEDE DE PRODUCTION DE GROUPES DE POINTS D'IMAGE AU MOYEN DE RAYONS LASER DANS L'ESPACE OU DANS LE PLAN

(30) Priorität: 25.09.2000 DE 10047695
(43) Veröffentlichungstag der Anmeldung: 02.07.2003
(73) Patentinhaber: Hartwig, Rüdiger, Dr., 48455 Bad Bentheim (DE)
(72) Erfinder: Hartwig, Rüdiger, Dr., 48455 Bad Bentheim (DE)
(74) Vertreter: ten Brink, Carsten
(86) Internationale Anmeldenummer: PCT/EP2001/011000
(87) Internationale Veröffentlichungsnummer: WO 2002/025353

(56) Entgegenhaltungen:
- DE-A- 2 622 802
- US-A- 5 854 613
- WILLIAMS R D ET AL: "A REAL-TIME AUTOSTEREOSCOPIC MULTIPLANAR 3D DISPLAY SYSTEM" INTERNATIONAL SYMPOSIUM OF THE SID. ANAHEIM, MAY 24 - 26, 1988, PLAYA DEL REY, SID, US, Bd. SYMP. 29, 24. Mai 1988 (1988-05-24), Seiten 91-94, XP000014157

## Beschreibung

Die Erfindung betrifft eine Vorrichtung zum Erzeugen von Bildpunktgruppen im Raum, Ausgestaltungen einer solchen Vorrichtung und mit solchen Vorrichtungen realisierbare Verfahren zum Erzeugen von Bildpunktgruppen im Raum.

"Bildpunktgruppen" sind Anordnungen von Bildpunkten, die ihrer geometrischen Erscheinung nach einander ähnlich und nach Ort, Größe sowie Richtung variierbar sind. Sie werden durch eine entsprechende Anzahl von Parametern vorgegeben und durch geeignete Vorrichtungen in Ablenksystemen erzeugt. Die Bildpunkte einer Bildpunktgruppe entstehen als Gruppe gemäß einem summarisch gegebenen Makrobefehl und vereinfachen den Aufbau des gesamten Bildgeschehens nach Umfang und Zeit. Daraus ergibt sich ein hoher bildlicher Informationsgehalt bei vergleichsweise geringem technischen Gesamtaufwand.

### Stand der Technik

Aus der DE 2622802 C2 ist ein 3D-Display zu entnehmen, mit dem Bildpunkte in einem zylindrischen Raum erzeugt werden, deren Gesamtheit echte Raumbilder ergeben. "Echt" bedeutet dabei, dass das räumliche Laserbild im Gegensatz zu 3D-Darstellungen auf flachen Bildschirmen oder Stereobildern frei in einem scheinbar leeren Raum schwebt. Es kann ohne Zuhilfenahme irgendwelcher optischer Hilfsmittel aus allen Richtungen rundum betrachtet werden kann, wie ein Fisch in einem Aquarium. Man spricht hier von "Volumetric 3D Displays". Bei der DE 2622802 wird das Raumbild durch Projektion eines Laserstrahls auf eine rotierende Schraubenfläche erzeugt, die in der Praxis "Helix" genannt wird. Daher wird dieses System als "Helix-Laser-3D-Display" bezeichnet.

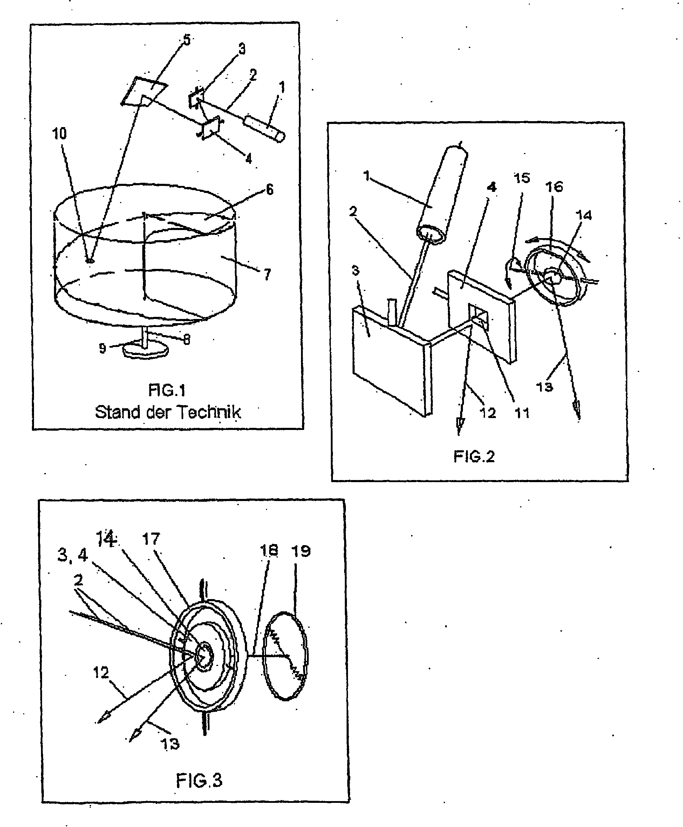

Ein Helix-Laser-3D-Display ist in seiner einfachsten Form aufgebaut wie in Fig.1 dargestellt. Vom Laser 1 gehen kurze Lichtimpulse aus, die von einem Ablenksystem gerichtet als Bildstrahl 2 auf die Helix 6 treffen und dort Bildpunkte 10 erzeugen. Obwohl die Bildpunkte an benachbarten Orten x,y,z - wegen der kontinuierlichen Drehung der Helix - nur zu total unterschiedlichen Zeitpunkten erzeugt werden können, werden sie vom menschlichen Auge als zusammenhängende benachbarte Bildpunkte gesehen. Die Helix besteht aus dünnem, durchscheinendem Material derart, daß der Bildstrahl nach oben und unten möglichst gleichstark diffus gestreut wird. Sie rotiert mit etwa 20 u/sek in einem durchsichtigen Zylinder 7 um die Rotationsachse 8 und ist für den Betrachter unsichtbar. Die Bildpunkte "schweben" im Raum.

Für einfache Demonstrationen dieses Prinzips mit nur wenigen Bildpunkten oder mit sich ständig wiederholenden, vorprogrammierten Raumbildern genügt ein opto-mechanisches Ablenksystem. Es besteht aus zwei orthogonal zueinander verdrehbaren Spiegeln, dem x-Ablenkspiegel 3 und dem y-Ablenkspiegel 4. Falls erforderlich, lenkt ein raumfester Umlenkspiegel 5 den Bildstrahl auf die Helix 6. Die Koordinaten x,y,z des gewünschten Bildpunktes werden vom Computer vorgegeben und bewirken über Stellglieder die Verstellung der Ablenkspiegel 3 und 4 für x und y, sowie einen Zeitimpuls für die Höhe z, der entsprechend dem Drehwinkel 9 der Helix zum Start eines Lichtblitzes des Lasers 1 erzeugt wird. Die horizontale Größe des Bildpunktes ist abhängig vom Durchmesser des Bildstrahls 2, seine Höhe von der Dauer des Lichtblitzes. Ernsthafte Anwendungen erfordern eine sehr große Anzahl von Bildpunkten, möglichst mit einer Vielzahl von Merkmale. Optomechanische Ablenksysteme wie die hier beschriebenen mechanischen Drehspiegel reichen dafür nicht aus.

Für militärische Anwendungen wurde das Helix-Laser-3D-Display bei der US-Navy mit großem technischen Aufwand gebaut und für verschiedene Zwecke eingesetzt (Technical Report 1793, Revision 2, October 1998, US-Navy Space and Naval Warfare Systems Center, San Diego, CA 92152-5001). Dafür wurden opto-elektronische Ablenksysteme höchster Leistung entwickelt. Sie erzeugen Raumbild-Szenarien die sich aus weit über 100.000 (!) feinen Bildpunkten zusammensetzen, über 20mal pro Sekunde aktualisiert werden, in drei Farben, dynamisch und mit variabler Intensität. Diese Helix-Laser-3D-Displays wurden zuerst für U-Boot-Navigation eingesetzt, dann für Flugsicherung und später auch für Medizin und CAD.

Für zivile Anwendungen sind solche Systeme noch zu aufwendig. Schon die Erzeugung einer geringeren Zahl von unabhängigen und beliebig variierbaren Bildpunkten erfordert unvergleichlich hohen technischen Aufwand für das Ablenksystem. Dieses muß, wie schon erwähnt, die Bildstrahlen für jeden einzelnen Bildpunkt des gesamten Raumbildes zur richtigen Zeit auf den gewünschten Ort x,y,z richten und ihn dort zeitrichtig aufblitzen lassen. Man muß sich dabei immer bewusst machen, daß jeder Bildpunkt x,y,z im Raum wegen der Drehung der Helix nur zu einem ganz bestimmten kurzen Zeitpunkt erzeugt werden kann. Das bedeutet, dass der Aufbau des Raumbildes Punkt für Punkt zeitlich nacheinander an im allgemeinen weit voneinander entfernt liegenden Orten x,y,z erfolgen muss. Diese Koordinierung von Ort und Zeit erfordert einen sehr schnellen Wechsel des Bildstrahls von jedem Ort x,y,z zu jedem beliebig weit entfernten anderen Ort x,y,z und ebenso eine hohe Präzision des Lichtblitzes nach Zeitpunkt und Dauer. Die Leistungsfähigkeit eines Helix-Laser-3D-Displays wird daran gemessen, wie viele Bildpunkte mit welchen variablen Merkmalen (Farne, Intensität etc.) das Ablenksystem genügend schnell erzeugen und zu einem Raumbildszenarium zusammenfügen kann. Der technische Aufwand für Ablenksysteme steigt exponentiell mit der Zahl der gewünschten Bildpunkte.
Üblicherweise werden die Raumbilder Punkt für Punkt aus einzelnen Bildpunkten aufgebaut. Jeder von Ihnen ist in x,y,z und durch zusätzliche Merkmalen definiert und muss vom Ablenksystem umgesetzt werden. Das Bedeutet: Jeder einzelne Bildpunkt erfordert vom Ablenksystem den gleichen Aufwand, egal welche Bedeutung er in dem Gesamtbild hat.

Aus der US 5,854,613 A ist die Möglichkeit zu entnehmen, mit Hilfe von halbdurchlässigen Spiegeln Bildstrahlen durch Strahlaufteilung zu vervielfachen. Dabei wird der eintretende Lichtstrahl in zwei austretende Strahlen halber Lichtstärke geteilt, wobei in Abfolge eine Mehrzahl von Lichtstrahlen mit entsprechendem Lichtstärkenabfall erzeugbar sind. Jeder der resultierenden Bildstrahlen benötigt eine eigene Ablenkeinheit. Entsprechend einer gewünschten x, y, z-Position angesteuert erzeugt jeder Teilstrahl einen einzelnen Bildpunkt im Raum.

### Aufgabe

Der Erfindung liegt vor diesem Hintergrund die Aufgabe zugrunde, Vorrichtungen und damit realisierbare Verfahren zu entwickeln, die das Erzeugen von Raumbildern, das heißt Bildpunktgruppen im Raum, auf einfache und schnelle Weise ermöglichen. Dadurch sollen dann auch die universellen Ablenksysteme entlastet und für andere Teilaufgaben freigesetzt werden. Bei geringerem technischen Aufwand sollen damit insgesamt mehr Bildpunkte erzeugt und bisherige Engpässe auf diese Weise überwunden werden. Der Anwender soll damit auch Zusatzinformationen erhalten, die das Raumbildszenarium anschaulicher machen und die Interaktion erleichtern.

Diese Aufgabe wird mit einer Vorrichtung zum Erzeugen von Bildpunktgruppen im Raum gelöst, bei der
in schneller Folge Lichtimpulse erzeugt werden, deren Licht von einer Ablenkeinrichtung in zwei unabhängigen orthogonalen Richtungen abgelenkt und auf eine rotierende Projektionsfläche gerichtet wird, auf der die Lichtimpulse als Bildpunkte sichtbar sind,
die Ablenkeinrichtung aus mehreren optischen Ablenkelementen besteht, die das einfallende Licht in einen Haupt- und mindestens einen Nebenstrahl aufspalten, indem sie durch Abtrennung mindestens eines Teiles des einfallenden Strahlquerschnitts mehrere Teilstrahlen erzeugen,
die Ablenkelemente unabhängig voneinander ansteuerbar sind und die Teilstrahlen so beeinflussen, dass Bildpunktgruppen unterschiedlicher Art erzeugt werden.

Die Aufteilung des Bildstrahls kann durch Abtrennung eines in sich geschlossenen Teiles des Bildstrahlquerschnitts erfolgen, oder durch Heraussieben eines Anteils des Bildsstrahls. Der Nebenstrahl wird nach der Aufteilung nach verschiedenen Verfahren behandelt. Dadurch entstehen Bildpunktgruppen unterschiedlicher Art. Solche, die sich seriell Zeitlich nacheinander) aufbauen und dem Betrachter als blinkend erscheinen und solche, die parallel (gleichzeitig) entstehen und dem Betrachter als ruhend erscheinen. Die so erzeugten Bildpunktgruppen bilden die Nebenbilder. Haupt- und Nebenbild zusammen ergeben das Gesamtbild. Der Betrachter sieht das Gesamtbild als eine Einheit, worin das Hauptbild dominierend erscheinen kann, während das Nebenbild sich z.B. durch gezielt geringere Größe seiner Bildpunkte oder das Blinken seiner Punkte etwas abheben kann. Solche Merkmale lassen sich für begleitende Zusatzinformationen vorteilhaft nutzen.

### Vorteile

Vorzugsweise soll das erfindungsgemäße Verfahren, für Anwendungen eingesetzt werden, die mit relativ wenigen Bildpunkten auskommen und für den Einsatz von Makrobildern geeignet sind: Zum Beispiel Flugsicherung und CAD. Diese Anwendungen wurde schon in der DE 2622802 hervorgehoben.
Für Flugsicherung wurde das Helix-Laser-3D.Display in den USA bei der US-Navy eingesetzt. Dort wurde im Zylinder das gesamte Flugszenarium durch einzelne Punkte aufgebaut. Neu hinzu kommen jetzt erfindungsgemäß Nebenbilder, die in Form von Bildpunktmustern zum Beispiel Flugobjekte symbolisieren oder in Form von Linienelementen Flugrichtung und Fluggeschwindigkeit anzeigen können. Weiterhin können Nebenbilder in Form von 2D-Bildern des gesamten Fluggeschehens am Boden oder am Deckel des Zylinders erzeugt werden, die in Verbindung mit Markierungen oder variierbaren Projektionen von Karten zusätzlich interaktiv genutzt werden können. Weiterhin können Flugobjekte im Raum markiert werden. D.h. sie können durch geeignete Makrobilder und/oder Blinken ohne großen zusätzlichen Aufwand hervorgehoben und schnell erkennbar gemacht werden.
Für CAD ergeben sich hiermit ebenfalls Vorteile, weil die Computer-Geometrie, die dem CAD zugrunde liegt, wesentlich durch Linienelemente und Vektoren bestimmt ist. In diesem Umfeld können Makrobilder, wie sie durch die hier beschriebenen Bildpunktgruppen darstellbar sind, die Anschaulichkeit erhöhen und die Interaktion Mensch-Maschine erleichtern.

**Im folgenden werden Ausführungsbeispiele der Erfindung** anhand von Zeichnungen näher erläutert. Es zeigen
Fig. 1 Stand der Technik im Prinzip,
Fig. 2 Vorrichtung zur Erzeugung horizontaler linearer Bildpunktgruppen,
Fig. 3 Vorrichtung entsprechend Fig.2 in kompakter Ausführung,
Fig. 4 Vorrichtung zur Erzeugung horizontaler zirkularer Bildpunktgruppen,
Fig. 5 Vorrichtung zur Erzeugung vertikaler linearer Bildpunktgruppen,
Fig. 6 Vorrichtung zur Erzeugung horizontaler Bildpunktgruppen als Symbole
Fig. 7 Vorrichtung zur Erzeugung von 2D-Kopien von Bildpunktgruppen,
Fig. 8 Kombinierte Anwendung verschiedener Vorrichtungen.

**Die Vorrichtung gemäß Fig.2** besteht aus einem x-Ablenkspiegel 3 und einem y-Ablenkspiegel 4, der im Zentrum einen Durchbruch hat. Dadurch wird ein Teil des vom Ablenkspiegel 4 reflektierten Bildstrahls vom y-Ablenkspiegel 4 als Hauptstrahl 12 reflektiert, während der andere Teil des Bildstrahls als Nebenstrahl 13 vom Nebenspiegel 14 reflektiert wird. Dieser Nebenspiegel ist verdrehbar in der Drehachse 15 gelagert, die ihrerseits in einem orthogonal dazu verdrehbaren Ring 16 ruht und mit diesem verdreht werden kann. Solange die Reflektionsebenen der Spiegel 4 und 14 parallel zueinander stehen, verlaufen auch die Lichtstrahlen 12 und 13 parallel zueinander. Jede Verdrehung des Spiegels 14 um die Drehachse 15 oder mit dem Ring 16 verstellt den Nebenstrahl 13 und erzeugt entsprechend seiner relativen Lage einen eigenständigen Bildpunkt auf der Helix. Geht man von kleinen Verdrehungen 15 und 16 aus, so liegt dieser zusätzliche Bildpunkt nahe dem durch den Hauptstrahl 12 erzeugten Bildpunkt. Seine Größe ist abhängig von der Öffnung des Durchbruchs 11.
So können auf der Helix Liniensegmente aus Punktgruppen dargestellt werden. Ihre Richtung wird durch die Stellung des Rings 16 bestimmt, ihre Länge durch die Schwingweite des Spiegels 14 um die Drehachse 15. Ihren Ursprung können sie in dem Bildpunkt haben, der durch den Hauptstrahl 12 erzeugt wird. Sie erscheinen dann wie Raumvektoren. Man kann dabei an Kondensstreifen eines Flugzeugs im Luftraum denken. Für die Flugsicherung können sie als Richtung und Geschwindigkeit eines Flugzeugs gesehen werden.
Die Schwingung des Nebenspiegels kann und soll konstant, aber unabhängig von der Drehzahl der Helix sein. Die Lichtblitze für Hauptstrahl und Nebenstrahl 13 sind identisch. Dadurch, daß hier auf Synchronismus verzichtet wird, werden die Teilbildpunkte statistisch verteilt zwischen den Grenzpositionen erscheinen. Damit erscheint neben dem streng raumfesten Haupt-Bildpunkt am Ort x,y,z ein aus feinen flakkernden Lichtblitzen markiertes Linienelement. In der Anwendung für die Flugsicherung lässt sich die Stärke Lichtblitze durch die Größe des Durchbruchs 11 abstimmen und das Erscheinungsbild des Kondensstreifens durch die Schwingfrequenz um die Drehachse 15. Die Elemente der Fig. 2 sind der Verständlichkeit wegen bewusst sehr weit auseinander gezogen. In der Praxis wird man sie so eng wie möglich zusammenlegen.

**Die Vorrichtung gemäß Fig.3** stellt eine Anordnung dar, bei der die zuvor beschriebenen Elemente in einer Ebene angeordnet sind. Durch kardanische Lagerung 17 sind alle Elemente im Sinne der zuvor beschriebenen Funktionsweise unabhängig voneinander verstellbar. Über ein Verbindungsstück in Richtung der Spiegelachse 18 und den drehbaren Ring 19 mit der gefederten Halterung sind die Schwingrichtung und die Amplitude der Schwingung zu bestimmen. Vorteilhaft hierbei ist die kompakte Bauweise und die Vermeidung mehrfacher Strahl-Umlenkungen, die stets mit Verlust an Genauigkeit und Lichtintensität verbunden sind.

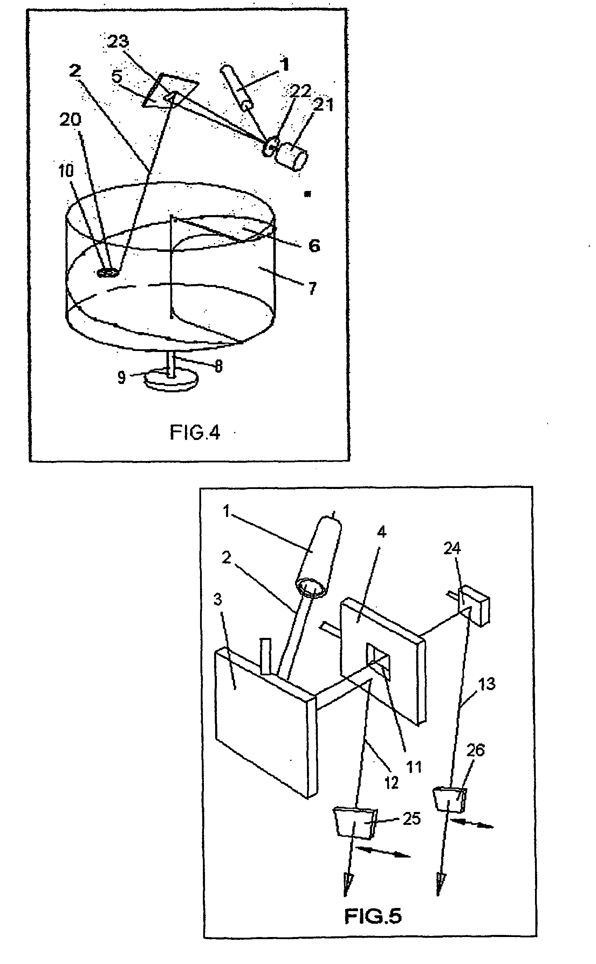

**Die Vorrichtung gemäß Fig.4** stellt eine Anordnung dar, die als 3D-Maus benutzt werden kann. Der Bildstrahl 2 fällt auf einen vom Motor 21 angetriebenen Drehspiegel 22, dessen Spiegelnormale geringfügig von der Drehachse des Motors 21 abweicht. Dadurch entsteht in der Reflektion ein Bildstrahlkreis 23, der über den Umlenkspiegel 5 auf die Helix 6 projiziert wird und dort beispielweise um den Bildpunkt 10 herum einen kreisförmigen Mauszeiger 20 erzeugt. Von Hand mit einem 3D-Eingabegerät geführt, kann solche ein Mauszeiger an jede Position x,y,z im Zylinder 7 gebracht werden. Durch numerischen Vergleich mit dem programmgemäß im Zylinder ablaufenden Bildgeschehen wird festgestellt, ob eines und wenn ja, welches der bildlich dargestellten Objekte gerade von dem Mauszeiger erfasst wird.

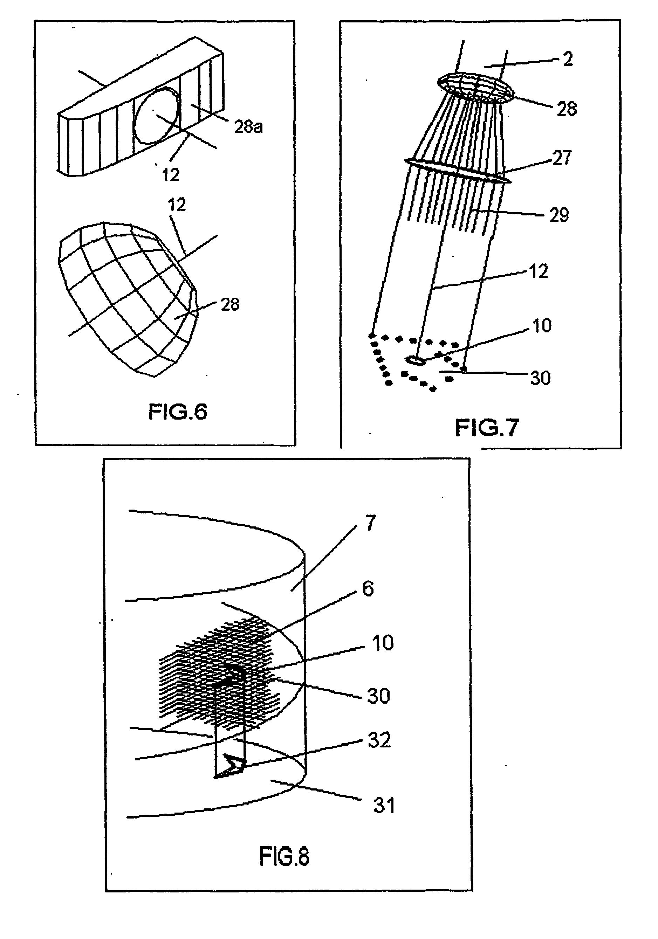

**Die Vorrichtung gemäß Fig.5** stellt eine Anordnung dar, die Liniensegmente in Richtung des Bildstrahls 12 erzeugt. Sie können beliebig lang sein und sowohl oberhalb als auch unterhalb der Haupt-Bildpunktposition liegen. Dies wird wie folgt erreicht: Der vom Ablenkspiegel 3 reflektierte Bildstrahl wird am Ablenkspiegel 4 geteilt. Ablenkspiegel 4 und Nebenspiegel 24 reflektieren den Hauptstrahl 12 und den Nebenstrahl 13. Beide Spiegel werden gekoppelt, daher bleiben auch Hauptstrahl 12 und Nebenstrahl 13 stets zueinander parallel. Beide Strahlen erhalten separate Blenden 25 und 26. Das Öffnen der Blenden gibt die kontinuierlich strahlenden Laserstrahlen frei. Die Blende 25 am Hauptstrahl 12 wird nur kurzzeitig geöffnet, dadurch entsteht der Bildpunkt 10. Die Blende 26 am Nebenstrahl 13 wird in Abstimmung mit der Drehbewegung der Helix zu beliebigen Zeiten und beliebig lange geöffnet. Wenn beispielsweise die Blende 26 offen ist, während die Helix an der vorgegebenen Stelle x,y von der Höhe z = 0 zur vorgegebenen Höhe z hinaufläuft, dann erzeugt der Nebenstrahl eine Linie vom Boden des Zylinders bis zum Punkt x,y,z. Wenn man die Blende 26 während dieser Zeit zusätzlich in Schwingungen bringt, entsteht eine gestrichelte Linie. In der Praxis müssen die Strahlen 12 und 13 ganz eng beieinander oder ineinander geführt werden.

**Die Vorrichtung gemäß Fig.6 und Fig.7** stellt eine Anordnung dar, die Bildpunktgruppen erzeugt, deren Bildpunke parallel (zeitgleich) entstehen. In diesem Falle werden Bildstrahlteiler aus linear optischen Elementen benutzt. In diesem Beispiel sind die Bildstrahlteiler aus flächig angeordneten Facetten 28 oder linear angeordneten Facetten 28a aufgebaut. Der Bildstrahl 2 trifft in Richtung des Hauptstrahls 12 auf die Bildstrahlteiler und wird aufgeteilt. Der Hauptstrahl 2 tritt ungehindert durch den seiner Größe nach beliebig vorgesehenen optisch inaktiven Bereich, während gleichzeitig zu jeder im Strahlenbereich liegenden Facette ein separater Nebenstrahl erzeugt wird. Die Orientierung jeder einzelnen Facette kann beliebig vorgeben werden und damit auch die Ablenkung des zugehörigen Nebenstrahls gegenüber dem Hauptstrahl 12. So können Bildpunktgruppen in Form von Mustern erzeugt werden. Eine Sammellinse 27 führt die Nebenstrahlen zusammen und es entsteht ein Nebenstrahlbündel 29, das in Richtung des Hauptstrahls 12 verläuft und neben dem Bildpunkt 10 ein Bildpunktsymbol 30 darstellt. Vergrößern und verkleinern kann man das Bildpunktsymbol durch revolverartigen Austausch der Sammellinse 27. Verdrehen kann man es durch Verdrehen der Bildstrahlteiler 28 um den Hauptstrahl 12. Im Grenzfall kann in diesem Beispiel der Bildschirmteiler 28a zu einer Zylinderlinse werden, und damit eine linienförmig angeordnete Bildpunktgruppe zu einem kontinuierlichen Strich. Der hier beispielhaft gezeigte Bildstrahlteiler kann im Grenzfall zu einem oder mehreren offenen oder geschlossenen Kurvenzügen werden, die im Sonderfall auch ein oder mehrere Kreise sein können.

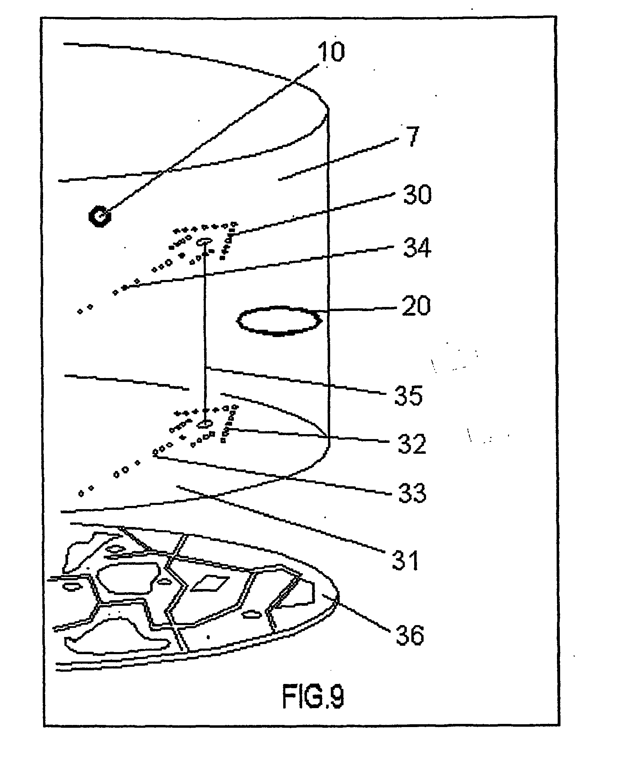

**Die Vorrichtung gemäß Fig. 8** stellt eine Anordnung dar, mit der aus dem Raumbild eine Bildpunktgruppe erzeugt wird, die eine 2D-Projektion des Raumbildes darstellt. Die Helix 6 im Zylinder 7 wird hierfür als feinmaschiges Netz ausgebildet und wirkt als flächiger Bildstrahlteiler. Jedes auf der Helix 6 erzeugte Raumbild bestehend beispielsweise aus einem zentralen Bildpunkt 10 und einem begleitenden Bildpunktsymbol 30 erscheint dann als 2D-Kopie 32 in Verlängerung des Hauptstrahls. In diesem Beispiel auf dem Boden des Zylinders.

**Die Anordnung gemäß Fig. 9** zeigt das Zusammenwirken mehrerer der zuvor beschriebenen Vorrichtungen. Bisher waren solche Anwendungen, weil die Ablenksysteme normalerweise nicht beliebig viele Bildpunkte erzeugen können, darauf beschränkt, Objekte nur in Form einzelner Bildpunkte oder eines Bündels solcher Bildpunkte 10 darzustellen.
Jetzt läßt sich das Raumbildgeschehen durch Bildpunktgruppen informativer darstellen. So kann neben einem Hauptbild ein Bildpunktsymbol 30, beispielsweise in Form eines Pfeils oder eines Flugzeugs, nach Größe und Richtung gezeigt werden (vergl. Fig.7). Gleichzeitig kann eine lineare Bildpunktgruppe als Flugrichtungsvektor 34 für Richtung und Geschwindigkeit darstellen (entweder nach Fig.3 oder nach Fig.6). Auch ein Flughöhenvektor 35 kann dargestellt werden (vergl. Fig.5). Gleichzeitig können die 2D-Kopien 32 und 33 des gesamten Raumbildes erzeugt werden (vergl. Fig.8). Sie können, wie hier gezeigt am Zylinderboden 31 erscheinen während gleichzeitig eine Landkarte 36 dorthin projiziert wird. Diese könnte auch durch den offenen Zylinderboden 31 auf eine entfernt darunter befindliche Landkarte 36 projiziert werden. Gleichzeitig kann eine unabhängige Bildpunktgruppe als Mauszeiger 20, von Hand gesteuert im Zylinder bewegt werden (vergl. Fig.4) und bei Anwahl eines der Objekte vom Computer Informationen dazu anfordern. Auch hiervon erscheint eine 2D-Kopie am Zylinderboden. Parallaxe-Fehler können durch lange Strahlwege klein gehalten werden. Sie sind bei Anwendungen mit dünn besetztem Abbildungsraum ohnehin tolerierbar.
Damit können Flugobjekte im Luftraum räumlich erfasst und gleichzeitig als 2D-Bild in einer der austauschbaren, beispielweise von unten projizierten Landkarten dargestellt werden.

## Patentansprüche

1. **Vorrichtung zum Erzeugen von Bildpunktgruppen** mit vorgegebener geometrischer Erscheinung im Raum mit
- Mitteln (1) zur Erzeugung von Lichtimpulsen in schneller Folge,
- einem Ablenksystem zur Ablenkung der Lichtimpulse zur Erzeugung von Bildpunkten (10) auf einer in Rotation versetzbaren Projektionsfläche (6),
- Mitteln zur Aufteilung des Lichtes der Lichtimpulse in einen Hauptstrahl (12) und einen Nebenstrahl (13), wobei mittels des Hauptstrahls (12) auf der Projektionsfläche (6) ein Bildpunkt (10) erzeugbar ist,
**gekennzeichnet durch**
einem im Strahlgang des Nebenstrahls (13) angeordneten, um eine Drehachse (15) schwingfähigen Nebenspiegel (14), der geeignet und vorgesehen ist, **durch** schwingende Bewegungen Bildpunkte einer linienförmigen Bildpunktgruppe (34) zu erzeugen,
wobei der Nebenspiegel (14) drehbar gelagert ist und wobei eine Drehung der Drehachse (15) des Nebenspiegels (14) geeignet und vorgesehen ist, die Richtung der linienförmigen Bildpunktgruppe (34) zu beeinflussen.

2. Vorrichtung nach Anspruch 1,
wobei der Nebenspiegel (14) mit seiner Drehachse (15) in einem orthogonal zur Drehachse (15) verdrehbaren Ring (16) drehbar gelagert ist.

3. Vorrichtung nach Anspruch 1,
wobei zur Ablenkung des Hauptstrahls (12) ein einzelner, kardanisch gelagerter Spiegel (3, 4) vorgesehen ist, der durch seine kardanische Lagerung (17) die Funktion zweier unabhängig verstellbarer Ablenkspiegel (3 und 4) übernimmt.

4. **Verfahren zum Erzeugen von Bildpunktgruppen** mit vorgegebener geometrischer Erscheinung im Raum mit einem Laser
(1) sowie einem Ablenksystem zur Ablenkung des Lichtes des Lasers (1) zur Erzeugung von Bildpunkten (10) auf einer rotierenden Projektionsfläche (6),
- wobei das Licht des Lasers (1) in einen Hauptstrahl (12) und mindestens einen Nebenstrahl (13) aufgeteilt wird,
- wobei der Hauptstrahl (12) zur Erzeugung eines Bildpunktes (10) mit einem Ablenkspiegel (4) auf die Projektionsfläche (6) gelenkt wird,
- wobei der Nebenstrahl (13) mit einem Nebenspiegel (14) auf die Projektionsfläche (6) gelenkt wird,
**gekennzeichnet durch**,
einen im Strahlgang des Nebenstrahls (13) angeordneten, um eine Drehachse (15) schwingenden Nebenspiegel (14), der geeignet und vorgesehen ist, **durch** schwingende Bewegungen Bildpunkte einer linienförmigen Bildpunktgruppe (34) zu erzeugen,
wobei der Nebenspiegel (14) zur Beeinflussung der Richtung der linienförmigen Bildpunktgruppe (34) zusammen mit der Drehachse (15) verdreht wird.

5. **Vorrichtung zum Erzeugen von Bildpunktgruppen** mit vorgegebener geometrischer Erscheinung im Raum mit
- Mitteln (1) zur Erzeugung von Lichtimpulsen in schneller Folge,
- einem Ablenksystem zur Ablenkung der Lichtimpulse zur Erzeugung von Bildpunkten (10) auf einer in Rotation versetzbaren Projektionsfläche (6),
- Mitteln zur Aufteilung des Lichtes der Lichtimpulse in einen Hauptstrahl (12) und einen Nebenstrahl (13), wobei mittels des Hauptstrahls (12) auf der Projektionsfläche (6) ein Bildpunkt (10) erzeugbar ist,
**gekennzeichnet durch**
einem im Strahlgang des Nebenstrahls (13) angeordneten, schwingfähigen Nebenspiegel (14), der geeignet und vorgesehen ist, **durch** schwingende Bewegungen Bildpunkte einer linienförmigen Bildpunktgruppe (34) zu erzeugen,
wobei der Nebenspiegel (14) an einem Ende eines in Richtung der Spiegelachse (18) verlaufenden Verbindungsstücks angebracht ist und wobei das andere Ende des Verbindungsstücks *in einer zur Vorgabe einer Schwingrichtung des Nebenspiegels (14) vorgesehenen Vorrichtung, insbesondere* einem drehbaren Ring (19), gefedert gehalten ist,
wobei eine Drehung der *Vorrichtung, insbesondere* des Rings (19), geeignet und vorgesehen ist, die Richtung der linienförmigen Bildpunktgruppe (34) zu beeinflussen.

6. *Vorrichtung nach Anspruch 5,*
*wobei der Nebenspiegel (14) in einer Aussparung eines zur Ablenkung des Hauptstrahls* (12) *vorgesehenen Spiegels (3, 4) angeordnet* ist.

7. **Verfahren zum Erzeugen von Bildpunktgruppen** mit vorgegebener geometrischer Erscheinung im Raum mit einem Laser (1) sowie einem Ablenksystem zur Ablenkung der Lichtes des Lasers (1) zur Erzeugung von Bildpunkten (10) auf eine rotierende Projektionsfläche (6),
- wobei das Licht des Lasers (1) in einen Hauptstrahl (12) und mindestens einen Nebenstrahl (13)aufgeteilt wird,
- wobei der Hauptstrahl (12) zur Erzeugung eines Bildpunktes (10) mit einem Ablenkspiegel (4) auf die Projektionsfläche (6) gelenkt wird,
- wobei der Nebenstrahl (13) mit einem Nebenspiegel (14) auf die Projektionsfläche (6) gelenkt wird,
**gekennzeichnet durch**,
einen im Strahlgang des Nebenstrahls (13) angeordneten, schwingenden Nebenspiegel (14), der geeignet und vorgesehen ist, **durch** schwingende Bewegungen Bildpunkte einer linienförmigen Bildpunktgruppe (34) zu erzeugen,
wobei der Nebenspiegel (14) schwingfähig gelagert ist in einer Drehachse (15), die vorzugsweise parallel zur Fläche des Hauptspiegels liegt, und
wobei die Drehachse (15) zusammen mit dem Nebenspiegel (14) verdrehbar ist um eine Drehachse, die vorzugsweise senkrecht zur Fläche des Hauptspiegels liegt.

8. **Vorrichtung zum Erzeugen von Bildpunktgruppen** mit vorgegebener geometrischer Erscheinung im Raum mit einem Laser (1) sowie
- einem Ablenksystem zur Ablenkung der Lichtes des Lasers (1) zur Erzeugung von Bildpunkten (10) auf einer in Rotation versetzbaren Projektionsfläche (6),
- Mitteln zur Aufteilung des Lichtes des Lasers (1) in einen Hauptstrahl (12) und einen Nebenstrahl (13),
- einem Ablenkspiegel (4) zur Reflektion des Hauptstrahls (12) auf die Projektionsfläche (6) zur Erzeugung eines Bildpunktes (10) und
- einem Nebenspiegel (24) zur Reflektion des Nebenstrahls (13) auf die Projektionsfläche (6),
**dadurch gekennzeichnet,**
**dass** der Nebenstrahl (13) zur Erzeugung von Bildpunkten einer linienförmigen Bildpunktgruppe vorgesehen ist,
**dass** der Ablenkspiegel (4) und der Nebenspiegel (24) gekoppelt sind,
**dass** bewegliche Blenden (25, 26) im Hauptstrahl (12) und im Nebenstrahl (13) zur Bestimmung der Lage und der Länge der linienförmigen Bildpunktgruppe vorgesehen sind.

9. Vorrichtung nach Anspruch 8,
wobei die beweglichen Blenden (25, 26) im Hauptstrahl (12) und im Nebenstrahl (13) unabhängig voneinander beweglich sind.

10. Vorrichtung nach Anspruch 8 oder Anspruch 9,
wobei die Blende (26) im Nebenstrahl (13) schwingfähig gelagert ist.

11. **Vorrichtung zum Erzeugen von Bildpunktgruppen** mit vorgegebener geometrischer Erscheinung im Raum mit einem Laser (1).
**gekennzeichnet durch**
einen Drehspiegel (22) und einen zum Ablenken des Lichtes des Lasers (1) auf eine in Rotation versetzbare Projektionsfläche (6) vorgesehenen Umlenkspiegel (5),
wobei der Drehspiegel (22) zur Rotation um eine geringfügig zu der Spiegelnormale des Drehspiegels (22) geneigte Achse zur Erzeugung von kreisförmigen Bildpunktgruppen (20) vorgesehen ist.

12. **Verfahren** zum Betrieb einer Vorrichtung nach einem der Ansprüche 1, 5, 8 oder 11,
wobei die Schwingfrequenz, mit der der schwingfähige Nebenspiegel (14) schwingt, oder die Drehfrequenz, mit der der Drehspiegel (22) dreht, unterschiedlich von der Rotationsgeschwindigkeit der Projektionsfläche (6) ist.

13. **Vorrichtung zum Erzeugen von Bildpunktgruppen** mit vorgegebener geometrischer Erscheinung im Raum mit Mitteln zur Erzeugung eines Bildstrahls-(2),
**gekennzeichnet durch**
einen Bildstrahlteiler (28, 28a) mit flächig oder linear angeordneten Facetten (28, 28a) zur Aufteilung des Bildstrahls (2) in einen Hauptstrahl (12) und mindestens einen Nebenstrahl (29), wobei der Bildstrahlteiler (28, 28a) den Hauptstrahl (12) und den oder jeden Nebenstrahl (29) zur Erzeugung von Bildpunktgruppen in Form von Mustern (30) auf eine in Rotation versetzbare Projektionsfläche (6) richtet.

14. Vorrichtung nach Anspruch 13,
wobei in Richtung des austretenden Haupt- oder Nebenstrahls (12, 29) dem Bildstrahlteiler (28, 28a) nachgeordnet eine Sammellinse (27) zum Zusammenführen der Nebenstrahlen (29) angeordnet ist.

15. Vorrichtung nach Anspruch 14,
wobei eine Mehrzahl von revolverartig austauschbaren Sammellinsen (27) vorgesehen ist.

16. Vorrichtung nach Anspruch 13,
wobei der Bildstrahlteiler (28, 28a) drehbar gelagert ist.

17. Vorrichtung nach Anspruch 13, wobei der Bildstrahlteiler (28, 28a) um eine Drehachse, die im Strahlgang des Hauptstrahls (12) liegt, drehbar gelagert ist.

18. Vorrichtung nach einem der Ansprüche 1, 5, 8, 11 oder 13,
wobei die Projektionsfläche (6) eine Helix ist.

19. Vorrichtung nach Anspruch 18,
wobei die Projektionsfläche (6) als feinmaschiges Netz ausgebildet ist, so dass die Bildpunkte von Hauptstrahl (10) und Nebenstrahl (12, 13) sowohl auf der Projektionsfläche (6) als auch auf einem Zylinderboden (31) eines Zylinders (7) in dem die Projektionsfläche (6) rotierbar angeordnet ist, erscheint.

20. Vorrichtung nach Anspruch 1, 5 oder 8,
wobei die Mittel zur Aufteilung des Lichtes des Lasers (1) in einen Hauptstrahl (12) und einen Nebenstrahl (13) einen Ablenkspiegel (4 bzw. 3,4) umfassen, der insbesondere in seinem Zentrum einen lichtdurchlässigen Bereich oder vorzugsweise einen Durchbruch (11) aufweist, wobei ein Teil des Lichtes des Lasers (1) von dem Ablenkspiegel (4) als Hauptstrahl (12) reflektiert wird und ein Teil des Lichtes des Lasers (1) den Durchbruch (11) des Ablenkspiegels (4) als Nebenstrahl (13) passiert.

## Claims

1. **Apparatus for producing picture element** groups of predetermined geometric appearance in space with
- means (1) for producing light pulses in rapid succession,
- a deflection system for deflecting the light pulses for the purpose of producing picture elements (10) on a rotatable projection surface (6),
- means for dividing the light of the light pulses into a main beam (12) and a secondary beam (13), it being possible to produce a picture element (10) on the projection surface (6) by means of the main beam (12),
**characterized by**
a secondary mirror (14), arranged in the projected path of the secondary beam (13) and capable of oscillating about a rotation axis (15), said secondary mirror (14) being suitable and provided for producing, by virtue of its oscillating movements, picture elements of a linear picture element group (34),
wherein the secondary mirror (14) is rotatably mounted and wherein a rotation of the rotation axis (15) of the secondary mirror (14) is suitable and provided for influencing the direction of the linear picture element group (34).

2. Apparatus according to Claim 1,
wherein the secondary mirror (14) with its rotational axis (15) is rotatably mounted in a ring (16) which can be turned orthogonally with respect to the rotational axis (15).

3. Apparatus according to Claim 1,
wherein a single, cardanic-mounted mirror (3, 4) is provided for deflecting the main beam (12), said mirror (3, 4) assuming the function of two independently adjustable deflection mirrors (3 and 4) by virtue of its cardanic mounting (17).

4. **Method for producing picture element groups** of predetermined geometric appearance in space with a laser (1) and with a deflection system for deflecting the light of the laser (1) in order to produce picture elements (10) on a rotating projection surface (6),
- wherein the light of the laser (1) is divided into a main beam (12) and at least one secondary beam (13),
- wherein the main beam (12) for producing a picture element (10) is deflected with a deflection mirror (4) onto the projection surface (6),
- wherein the secondary beam (13) is deflected with a secondary mirror (14) onto the projection surface (6),
**characterized by**
a secondary mirror (14), arranged in the projected path of the secondary beam (13) and oscillating about a rotation axis (15), said secondary mirror (14) being suitable and provided for producing, by virtue of its oscillating movements, picture elements of a linear picture element group (34),
wherein the secondary mirror (14) is turned along with the rotation axis (15) for influencing the direction of the linear picture element group (34).

5. **Apparatus for producing picture element groups** of predetermined geometric appearance in space with
- means (1) for producing light pulses in rapid succession,
- a deflection system for deflecting the light pulses for the purpose of producing picture elements (10) on a rotatable projection surface (6),
- means for dividing the light of the light pulses into a main beam (12) and a secondary beam (13), it being possible to produce a picture element (10) on the projection surface (6) by means of the main beam (12),
**characterized by**
a secondary mirror (14), arranged in the projected path of the secondary beam (13) and capable of oscillating, said secondary mirror (14) being suitable and provided for producing, by virtue of its oscillating movements, picture elements of a linear picture element group (34),
wherein the secondary mirror (14) is arranged at one end of a connecting piece running in the direction of the mirror axis (18) and wherein the other end of the connecting piece is spring-mounted in a device provided for the purpose of specifying a direction of oscillation of the secondary mirror (14), in particular in a rotatable ring (19),
wherein a rotation of the device, in particular of the ring (19), is suitable and provided for influencing the direction of the linear picture element group (34).

6. Apparatus according to Claim 5,
wherein the secondary mirror (14) is arranged in a cutout of a mirror (3, 4) provided for deflecting the main beam (12).

7. **Method for producing picture element groups** of predetermined geometric appearance in space with a laser (1) and with a deflection system for deflecting the direction of the laser (1) in order to produce picture elements (10) on a rotating projection surface (6),
- wherein the light of the laser (1) is divided into a main beam (12) and at least one secondary beam (13),
wherein the main beam (12) for producing a picture element (10) is deflected with a deflection mirror (4) onto the projection surface (6),
- wherein the secondary beam (13) is deflected with a secondary mirror (14) onto the projection surface (6),
**characterized by**
a secondary mirror (14), arranged in the projected path of the secondary beam (13) and oscillating about a rotation axis (15), said secondary mirror (14) being suitable and provided for producing, by virtue of its oscillating movements, picture elements of a linear picture element group (34),
wherein the secondary mirror (14) is mounted and capable of oscillating in a rotation axis (15), which preferably lies parallel to the surface of the main mirror , and
wherein the rotation axis (15) can be turned along with the secondary mirror (14) about a rotational axis which preferably lies perpendicular to the surface of the main mirror.

8. **Apparatus for producing picture element groups** of predetermined geometric appearance in space with a laser (1) and with
- a deflection system for deflecting the light of the laser (1) for the purpose of producing picture elements (10) on a projection surface (6) that can be set in rotation,
- means for dividing the light of the laser (1) into a main beam (12) and a secondary beam (13),
- a deflection mirror (4) for reflecting the main beam (12) onto the projection surface (6) for the purpose of producing a picture element (10) and
- a secondary mirror (24) for reflecting the secondary beam (13) onto the projection surface (6),
**characterized in that**
the secondary beam (13) is provided for producing picture elements of a linear picture element group,
the deflection mirror (4) and the secondary mirror (24) are coupled,
movable diaphragms (25, 26) are provided in the main beam (12) and in the secondary beam (13) for determining the position and length of the linear picture element groups.

9. Apparatus according to Claim 8,
wherein the movable diaphragms (25, 26) in the main beam (12) and in the secondary beam (13) can be moved independently of one another.

10. Apparatus according to Claim 8 or Claim 9,
wherein the diaphragm (26) in the secondary beam (13) is mounted to execute oscillatory movements.

11. **Apparatus for producing picture element groups** of predetermined geometric appearance in space with a laser (1),
**characterized by**
a rotating mirror (22) and a deflection mirror (5) provided for deflecting the light of the laser (1) onto a projection surface (6) that can be set in rotation,
wherein the rotating mirror (22) is provided for rotating about an axis slightly inclined to the mirror line of the rotating mirror (22) for producing circular picture element groups (20).

12. Method for the operation of an apparatus according to one of the Claims 1, 5, 8 or 11,
wherein the frequency of oscillation at which the oscillatory secondary mirror (14) oscillates, or the rotation frequency at which the rotating mirror (22) rotates, differs from the rotational speed of the projection surface (6).

13. Apparatus for producing picture element groups of predetermined appearance in space with means for generating a image beam (2),
**characterized by**
an image beam splitter (28, 28a) with planar or linear facets (28, 28a) for dividing the image beam (2) into a main beam (12) and at least one secondary beam (29),
wherein the image beam splitter (28, 28a) directs the main beam (12) and the or each secondary beam (29) onto a projection surface (6) set in rotation for the purpose of producing picture element groups in the form of patterns (30).

14. Apparatus according to Claim 13,
wherein a convex lens (27) for merging the secondary beams (29) is arranged downstream of the image beam splitter (28, 28a) as seen in the direction of the emitted main or secondary beam (12, 29).

15. Apparatus according to Claim 14,
wherein a plurality of revolver-like and interchangeable convex lens (27) is provided.

16. Apparatus according to Claim 13,
wherein the image beam splitter (28, 28a) is swivel-mounted.

17. Apparatus according to Claim 13,
wherein the image beam splitter (28, 28a) is swivel-mounted about a rotation axis lying in the path of the main beam (12).

18. Apparatus according to one of the Claims 1, 5, 8, 11 or 13,
wherein the projection surface (6) is a helix.

19. Apparatus according to Claim 18,
wherein the projection surface (6) is configured as a closely woven net so that the picture elements of the main beam (10) and secondary beam (12, 13) appear on the projection surface (6) as well as on a bottom (31) of a cylinder (7) in which the projection surface (6) is arranged and capable of rotation.

20. Apparatus according to Claim 1, 5 or 8,
wherein the means for dividing the light of the laser (1) into a main beam (12) and a secondary beam (13) include a deflection mirror (4 or 3,4), which has in particular in its middle a light-permeable region or preferably a cutout (11),
wherein a part of the light of the laser (1) is deflected by the deflection mirror (4) as the main beam (12) and a part of the light of the laser (1) passes through the cutout (11) of the deflection mirror (4) as the secondary beam (13).

## Revendications

1. Dispositif de production de groupes de points d'image ayant une apparence géométrique prédéterminée dans l'espace, comportant
- des moyens (1) pour produire des impulsions lumineuses dans une séquence rapide,
- un système de déviation pour dévier les impulsions lumineuses afin de produire des points d'image (10) sur une surface de projection (6) déplaçable en rotation,
- des moyens pour diviser la lumière des impulsions lumineuses en un rayon principal (12) et un rayon annexe (13), moyennant quoi un point d'image (10) peut être produit sur la surface de projection (6) au moyen du rayon principal (12)
**caractérisé par**
un miroir annexe (14) oscillant autour d'un axe de rotation (15), disposé dans le trajet de rayon du rayon annexe (13), qui est approprié et prévu afin de produire par des mouvements oscillants des points d'image d'un groupe de points d'image (34) linéaire,
moyennant quoi le miroir annexe (14) est positionné de manière rotative et moyennant quoi une rotation de l'axe de rotation (15) du miroir annexe (14) est appropriée et prévue afin d'influencer la direction du groupe de points d'image (34) linéaire.

2. Dispositif selon la revendication 1,
dans lequel le miroir annexe (14) est positionné de manière rotative avec son axe de rotation (15) dans un anneau (16) déplaçable en rotation orthogonalement par rapport à l'axe de rotation (15).

3. Dispositif selon la revendication 1,
dans lequel, afin de dévier le rayon principal (12), un miroir (3,4) individuel, positionné à la Cardan est prévu, lequel adopte par son positionnement à la Cardan (17) la fonction de deux miroirs de déviation (3 et 4)réglables indépendamment.

4. Procédé de production de groupes de points d'image ayant une apparence géométrique prédéterminée dans l'espace, comportant un laser (1) ainsi qu'un système de déviation pour dévier la lumière du laser (1) afin de produire des points d'image (10) sur une surface de projection(6) rotative,
- dans lequel la lumière du laser (1) est divisée en un rayon principal (12) et au moins un rayon annexe (13),
- dans lequel le rayon principal (12) est dévié sur la surface de projection (6) au moyen d'un miroir de déviation (4) afin de produire un point d'image (10),
- dans lequel le rayon annexe (13) est dévié sur la surface de projection (6) au moyen d'un miroir annexe (14),
**caractérisé par**
un miroir annexe (14) oscillant autour d'un axe de rotation (15), disposé dans le trajet de rayon du rayon annexe (13), qui est approprié et prévu afin de produire par des mouvements oscillants des points d'image d'un groupe de points d'image (34) linéaire,
moyennant quoi le miroir annexe (14) est déplacé en rotation conjointement à l'axe de rotation (15) afin d'influencer la direction du groupe de points d'image (34) linéaire.

5. Dispositif de production de groupes de points d'image ayant une apparence géométrique prédéterminée dans l'espace, comportant
- des moyens (1) pour produire des impulsions lumineuses dans une séquence rapide,
- un système de déviation pour dévier les impulsions lumineuses afin de produire des points d'image (10) sur une surface de projection (6) déplaçable en rotation,
- des moyens pour diviser la lumière des impulsions lumineuses en un rayon principal (12) et un rayon annexe (13), moyennant quoi un point d'image (10) peut être produit sur la surface de projection (6) au moyen du rayon principal (12),
**caractérisé par**
un miroir annexe (14) oscillant, disposé dans le trajet de rayon du rayon annexe (13), qui est approprié et prévu afin de produire par des mouvements oscillants des points d'image d'un groupe de points d'image (34) linéaire,
moyennant quoi le miroir annexe (14) est monté à une extrémité d'une pièce de liaison s'étendant dans le sens de l'axe du miroir (18) et moyennant quoi l'autre extrémité de la pièce de liaison est maintenue par ressort dans un dispositif prévu afin de prescrire un sens d'oscillation du miroir annexe (14), notamment un anneau (19) rotatif,
moyennant quoi une rotation du dispositif, notamment de l'anneau (19), est appropriée et prévue afin d'influencer le sens du groupe de points d'image (34) linéaire.

6. Dispositif selon la revendication 5,
dans lequel le miroir annexe (14) est disposé dans un évidement d'un miroir (3,4) prévu afin de dévier le rayon principal (12).

7. Procédé de production de groupes de points d'image ayant une apparence géométrique prédéterminée dans l'espace, comportant un laser (1) ainsi qu'un système de déviation pour dévier la lumière du laser (1) afin de produire des points d'image (10) sur une surface de projection (6) rotative,
- dans lequel la lumière du laser (1) est divisée en un rayon principal (12) et au moins un rayon annexe (13),
- dans lequel le rayon principal (12) est dévié sur la surface de projection (6) au moyen d'un miroir de déviation (4) afin de produire un point d'image (10),
- dans lequel le rayon annexe (13) est dévié au moyen d'un miroir annexe (14) sur la surface de projection (6),
**caractérisé par**
un miroir annexe (14) oscillant, disposé dans le trajet de rayon du rayon annexe (13), qui est approprié et prévu afin de produire par des mouvements oscillants des points d'image d'un groupe de points d'image (34) linéaire,
moyennant quoi le miroir annexe (14) est positionné de manière oscillante, dans un axe de rotation (15), qui repose de préférence parallèlement à la surface du miroir principal, et
moyennant quoi l'axe de rotation (15) est déplacé en rotation conjointement au miroir annexe (14) autour d'un axe de rotation, qui repose de préférence perpendiculairement à la surface du miroir principal.

8. Dispositif de production de groupes de points d'image ayant une apparence géométrique prédéterminée dans l'espace, comportant un laser (1) ainsi que
- un système de déviation pour dévier la lumière du laser (1) afin de produire des points d'image (10) sur une surface de projection (6) déplaçable en rotation,
- des moyens pour diviser la lumière du laser (1) en un rayon principal (12) et un rayon annexe (13),
- un miroir de déviation (4) pour la réflexion du rayon principal (12) sur la surface de projection (6) afin de produire un point d'image (10) et
- un miroir annexe (24) pour la réflexion du rayon annexe (13) sur la surface de projection (6),
**caractérisé en ce que**
le rayon annexe (13) est prévu afin de produire des points d'image d'un groupe de points d'image linéaire, le miroir de déviation (4) et le miroir annexe (24) sont couplés,
des diaphragmes (25,26) mobiles sont prévus dans le rayon principal (12) et dans le rayon annexe (13) afin de déterminer la position et la longueur du groupe de points d'image linéaire.

9. Dispositif selon la revendication 8,
dans lequel les diaphragmes (25,26) mobiles sont mobiles indépendamment l'un de l'autre dans le rayon principal (12) et dans le rayon annexe (13).

10. Dispositif selon la revendication 8 ou 9,
dans lequel les diaphragmes (26) sont positionnés de manière oscillante dans le rayon annexe (13).

11. Dispositif de production de groupes de points d'image ayant une apparence géométrique prédéterminée dans l'espace, comportant un laser (1),
**caractérisé par**
un miroir rotatif (22) et un miroir déflecteur (5) prévu afin de dévier la lumière du laser (1) sur une surface de projection (6) déplaçable en rotation,
moyennant quoi le miroir rotatif (22) est prévu pour la rotation autour d'un axe légèrement incliné par rapport à la normale du miroir rotatif (22) afin de produire des groupes de points d'image (20) circulaires.

12. Procédé de fonctionnement d'un dispositif selon une des revendications 1,5,8 ou 11,
dans lequel la fréquence d'oscillation, à laquelle le miroir annexe (14) oscillant oscille, ou la fréquence de rotation, à laquelle le miroir rotatif (22) entre en rotation, est différente de la vitesse de rotation de la surface de projection (6).

13. Dispositif de production de groupes de points d'image ayant une apparence géométrique prédéterminée dans l'espace, comportant des moyens pour produire un rayon d'image (2),
**caractérisé par**
un diviseur de rayon d'image (28,28a) comportant des facettes (28,28a) disposées à plat ou linéairement afin de diviser le rayon d'image (2) en un rayon principal (12) et au moins un rayon annexe (29), moyennant quoi le diviseur de rayon d'image (28, 28a) dirige le rayon principal (12) et le ou chaque rayon annexe (29) sur une surface de projection (6) déplaçable en rotation afin de produire des groupes de points d'image sous la forme de motifs (30).

14. Dispositif selon la revendication 13,
dans lequel dans le sens du rayon principal ou annexe (12,29) sortant, une lentille convergente (27) est disposée après le diviseur de rayon d'image (28,28a) afin de guider conjointement les rayons annexes (29).

15. Dispositif selon la revendication 14,
dans lequel une pluralité de lentilles convergentes (27) pouvant être remplacées selon un système de tourelle revolver est prévue.

16. Dispositif selon la revendication 13,
dans lequel le diviseur de rayon d'image (28,28a) est positionné rotativement.

17. Dispositif selon la revendication 13, dans lequel le diviseur de rayon d'image (28,28a) est positionné rotativement autour d'un axe de rotation, qui repose dans le trajet de rayon du rayon principal (12).

18. Dispositif selon une des revendications 1,5,8, 11 ou 13, dans lequel la surface de projection (6) est une hélice.

19. Dispositif selon la revendication 18,
dans lequel la surface de projection (6) est réalisée comme un réseau à mailles fines de telle sorte que les points d'image provenant du rayon principal (10) et du rayon annexe (12,13) apparaissent autant sur la surface de projection (6) que sur une base de cylindre (31) d'un cylindre (7), dans lequel la surface de projection (6) est disposée rotativement.

20. Dispositif selon la revendication 1,5 ou 8,
dans lequel les moyens pour diviser la lumière du laser (1) en un rayon principal (12) et un rayon annexe (13) comprennent un miroir de déviation (4, respectivement 3,4), lequel présente notamment en son centre une zone translucide ou de préférence une percée (11), moyennant quoi une partie de la lumière du laser (1) est réfléchie par le miroir de déviation (4) en tant que rayon principal (12) et une partie de la lumière du laser (1) traverse la percée (11) du miroir de déviation (4) en tant que rayon annexe (13).
